# EUROPÄISCHE PATENTANMELDUNG

(11) **EP 1 325 824 A2**
(43) Veröffentlichungstag der Anmeldung: **09.07.2003**
(21) Anmeldenummer: 02027340.5
(22) Anmeldetag: 07.12.2002
(51) Int. Cl.: B60H 1/26

(54) **Belüftungsaufsatz für ein Fahrzeugdach**

(30) Priorität: 04.01.2002 DE 10200164
(71) Anmelder: Webasto Vehicle Systems International GmbH, 82131 Stockdorf (DE)
(72) Erfinder: Klesing, Joachim, 80992 München (DE); Kölbl, Michael, 82061 Neuried (DE); Pollak, Martin, 82178 Puchheim (DE); Schleicher, Bernd, 80689 München (DE); Seifert, Wolfgang, 82110 Germering (DE); Teschner, Helmut, 86923 Finning (DE); Vecchioni, Bernhard, Oxford, Michigan 48371 (US)
(74) Vertreter: Konnerth, Dieter Hans

(57) **Zusammenfassung**

Die Erfindung betrifft einen Belüftungsaufsatz (3) für ein Fahrzeugdach (1) zur Belüftung des Fahrzeuginnenraums (4), wobei der länglich gebildete Belüftungsaufsatz (3) einen Luftkanal mit einer vorderen Luftöffnung (6) und mit einer hinteren Luftöffnung (7), die oberhalb des Fahrzeugdaches (1) münden, aufweist und der Luftkanal über einen im Belüftungsaufsatz (3) gebildeten Strömungsweg mit dem Fahrzeuginnenraum (4) in Strömungsverbindung ist. Das Fahrzeugdach (1) ist bevorzugt als Glasdach mit mindestens zwei Glasflächen (2a, 2b) ausgebildet ist, an dem im wesentlichen mittig der Belüftungsaufsatz (3) angebracht ist.

## Beschreibung

Die Erfindung betrifft einen Belüftungsaufsatz für ein Fahrzeugdach zur Belüftung des Fahrzeuginnenraums, ein Fahrzeugdach mit einem solchen Belüftungsaufsatz sowie ein Dachmodul mit einem solchen Belüftungsaufsatz für ein Fahrzeugdach.

Aus der DE 1 455 860 A1 ist eine Be- und Entlüftungseinrichtung im Dach eines Fahrzeugs bekannt geworden, die eine in einer Dachöffnung drehbar in einem Gehäuse angeordnete Hülse aufweist, welche in Fahrtrichtung sowie in Gegenfahrtrichtung am Dach verstellbar ist, wodurch entweder Luft in das Fahrzeuginnere hineingedrückt oder durch einen entstehenden Unterdruck aus dem Innenraum des Fahrzeugs Luft abgesaugt wird.

Aus der DE 1 680 846 B1 ist eine Peltierelement-Kühlanordnung für Kraftfahrzeuge bekannt geworden, welche auf einem doppelschalig ausgebildeten Dach eines Kraftfahrzeugs angebracht wird, wobei mindestens ein Gebläse zum Transport der zu kühlenden Luft in den Innenraum des Fahrzeugs vorgesehen ist.

In der US 5,344,361 A ist eine tragbare Hilfsgebläseeinheit beschrieben, die im Sonnendach eines Fahrzeugs angebracht werden kann, wobei durch das eingebaute Gebläse warme Luft aus dem Fahrzeuginnenraum abgesaugt werden kann.

Der Erfindung liegt die Aufgabe zugrunde, einen eingangs genannten Belüftungsaufsatz mit verbesserter Funktionsfähigkeit sowie ein Fahrzeugdach mit einem solchen Belüftungsaufsatz und ein Dachmodul mit einem solchen Belüftungsaufsatz für ein Fahrzeugdach zu schaffen.

Die Aufgabe wird bei dem eingangs genannten Belüftungsaufsatz erfindungsgemäß dadurch gelöst, daß der länglich gebildete Belüftungsaufsatz einen Luftkanal mit einer vorderen Luftöffnung und mit einer hinteren Luftöffnung, die oberhalb des Fahrzeugdaches münden, aufweist und daß der Luftkanal über einen im Belüftungsaufsatz gebildeten Strömungsweg mit dem Fahrzeuginnenraum in Strömungsverbindung ist. In dem Luftkanal bildet sich im Fahrbetrieb eine durchgehende Luftströmung, die zumindest teilweise über den Strömungsweg in den Fahrzeuginnenraum geleitet wird. Der Luftkanal ist nach außen hin abgedeckt und lediglich durch die vordere und die hintere Luftöffnung zugänglich, wobei statt jeweils einer Öffnung auch mehrere Öffnungen vorgesehen sein können. Ein solcher Belüftungsaufsatz kann als Nachrüsteinheit nachträglich an einem Fahrzeugdach angebracht werden, indem eine entsprechende Montageöffnung an dem Fahrzeugdach geschaffen wird.

Vorteilhafte Ausführungsformen sind in den Unteransprüchen angegeben.

Der Belüftungsaufsatz enthält bevorzugt eine obere Abdeckung, die die mindestens eine vordere Luftöffnung und die mindestens eine hintere Luftöffnung aufweist und den Luftkanal abdeckt, wobei im Fahrzeuginnenraum Luftöffnungen zur Zu- oder Abführung von Luft über den Strömungsweg vorgesehen sind.

Bevorzugt enthält der Belüftungsaufsatz im Strömungsweg zwischen dem Luftkanal und dem Fahrzeuginnenraum einen Luftfilter, um unerwünschte Fremdkörper, wie z. B. Schmutzpartikel, Pollen etc. vom Fahrzeuginnenraum fernzuhalten. Durch diese Anordnung wird nur die vom Luftkanal abgezweigte und in den Fahrzeuginnenraum strömende Luft durch den Luftfilter geleitet, während die Luftströmung im Luftkanal nicht behindert wird. Größere Schmutzpartikel strömen somit durch den Luftkanal gerade hindurch und setzen damit den Luftfilter nicht zu. Der Luftfilter kann beispielsweise einen Abschnitt einer Seite des Luftkanals, insbesondere eine Oberseite, bilden oder an einer diese Seite bildenden Gitterstruktur befestigt sein.

Vorteilhafterweise ist der Belüftungsaufsatz in das Fahrzeugdach integriert und bildet eine konstruktiv und formal gestaltete Einheit mit dem Fahrzeugdach.

In einer weiteren vorteilhaften Ausführungsform können die Luftöffnungen des Belüftungsaufsatzes verschlossen werden oder die Größe ihres Strömungsquerschnitts kann eingestellt werden. Damit kann der im Belüftungsaufsatz entstehende Luftstrom reguliert und an die Erfordernisse des Benutzers angepaßt werden. In diesem Zusammenhang kann auch eine elektrische oder elektronische Verstellung oder Verschließung der Luftöffnungen vorgesehen sein, wodurch über ein Steuergerät abhängig von vorgegebenen Parametern (z.B. Außentemperatur, Fahrgeschwindigkeit etc.) eine entsprechende Dimensionierung der Luftöffnungen erreicht wird. So kann der im Belüftungsaufsatz entstehende Luftstrom z. B. an die Fahrgeschwindigkeit des Fahrzeugs angepaßt werden, so daß bei zu- und abnehmender Fahrgeschwindigkeit zur Erzielung eines im wesentlichen konstanten Luftstroms die Querschnitte der Luftöffnungen verkleinert bzw. vergrößert werden. Dies kann automatisch oder manuell durch den Benutzer erfolgen.

Vorteilhafterweise ist die Abdeckung des Belüftungsaufsatzes an ihren Längsseiten abdichtend mit dem Fahrzeugdach verbunden, um einen wirbelfreien Luftstrom zwischen vorderer und hinterer Luftöffnung zu erreichen.

Der Belüftungsaufsatz besitzt in einer weiteren vorteilhaften Ausführungsform unter der Abdeckung einen Luftkanalboden, der als Begrenzungsfläche für den im Belüftungsaufsatz entstehenden Luftstrom dient. Dieser Luftkanalboden kann einen zumindest bereichsweise H-förmigen Querschnitt besitzen, so daß der Luftstrom darin kanalisiert werden kann.

Gemäß einer weiteren vorteilhaften Ausführungsform kann der Belüftungsaufsatz mindestens einen Lüfter aufweisen, um auch bei stehendem Fahrzeug und ergänzend bei bewegtem Fahrzeug den Luftstrom im Belüftungsaufsatz zu verstärken. Ein derartiger Lüfter kann z.B. als Radiallüfter ausgebildet sein.

Um den im Fahrzeuginnenraum eingeleiteten Luftstrom zu regulieren, können die Luftöffnungen des Belüftungsaufsatzes verstellbar sein. Ferner kann der Belüftungsaufsatz einen vom Fahrzeuginnenraum her zugänglichen Nutzbereich, z.B. eine Vertiefung im Luftkanalboden, aufweisen, in welchem Bauelemente wie Staufächer, Sichtanzeigen, Lautsprecher etc. angebracht werden können.

Zur Nachrüstung oder zur getrennten Vorproduktion kann der Belüftungsaufsatz für das Fahrzeugdach auch als eigene Baueinheit konzipiert und hergestellt werden. Hierdurch können bestehende und z. B. als Glasdach ausgebildete Fahrzeugdächer nachgerüstet werden oder es kann ein vorgefertigter Belüftungsaufsatz bei der Montage eines beschriebenen Fahrzeugdachs in eine entsprechende Ausnehmung des Fahrzeugdachs eingesetzt werden.

Die Aufgabe wird auch durch ein Fahrzeugdach mit einem Belüftungsaufsatz nach einem der Ansprüche 1 bis 12 gelöst, wobei der längliche Belüftungsaufsatz am Fahrzeugdach im wesentlichen mittig in Dachlängsrichtung angebracht ist. Für eine verbesserte Luftzuführung und Luftdurchströmung zum bzw. durch den Belüftungsaufsatz ist zweckmäßigerweise vorgesehen, daß sich der Belüftungsaufsatz am Fahrzeugdach im wesentlichen von der Frontscheibe bis zur Heckscheibe erstreckt. Bevorzugt ist dabei das Fahrzeugdach als Glasdach mit mindestens zwei Glasflächen gebildet, zwischen denen der Belüftungsaufsatz angeordnet ist.

Durch den Belüftungsaufsatz wird es ermöglicht, auch ein als Glasdach ausgebildetes Fahrzeugdach mit einem Belüftungssystem zu versehen und damit der aufgrund der Lichtdurchlässigkeit bei einem Glasdach auftretenden Erwärmung des Fahrzeuginnenraums durch Zu- oder Abführung von Luft durch den Belüftungsaufsatz entgegenzuwirken. Es entsteht ein lichtdurchlässiges Fahrzeugdach mit einem temperierbaren Fahrzeuginnenraum.

Ebenfalls zur Nachrüstung oder zur Vorfabrikation kann ein erfindungsgemäßes Dachmodul mit Belüftungsaufsatz für ein Fahrzeugdach gemäß Anspruch 17 vorgesehen sein. Dieses Dachmodul kann neben dem Belüftungsaufsatz auch Teile des Glasdachs oder das gesamte Glasdach umfassen. Ein derartiges Dachmodul wird dann bei der Montage oder Nachrüstung in eine entsprechende Aussparung des Fahrzeugdachs eingesetzt.

Nachfolgend wird ein Ausführungsbeispiel des Fahrzeugdaches unter Bezugnahme auf die Zeichnung näher erläutert. Es zeigt:
- Fig. 1: eine schematische Draufsicht auf ein Fahrzeug mit einem erfindungsgemäßen Belüftungsaufsatz am Fahrzeugdach;
- Fig. 2: einen Längsschnitt A-A durch das Fahrzeugdach nach Fig. 1; und
- Fig. 3: einen Schnitt B-B durch das Fahrzeugdach nach Fig. 1.

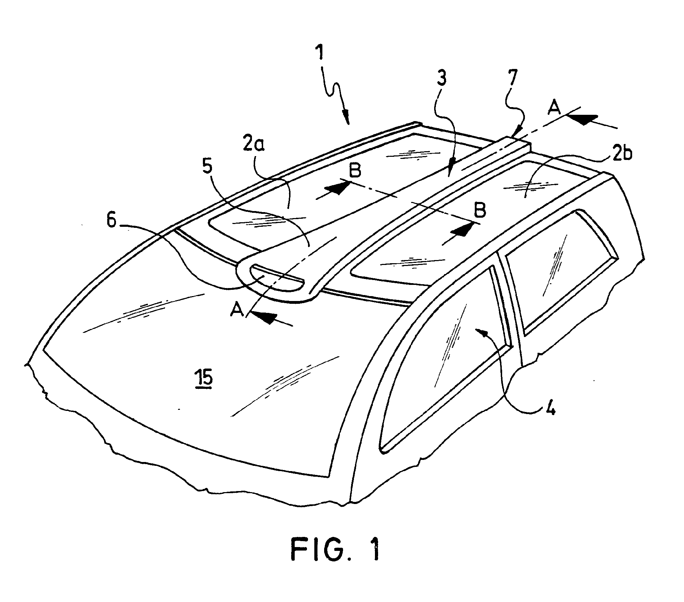

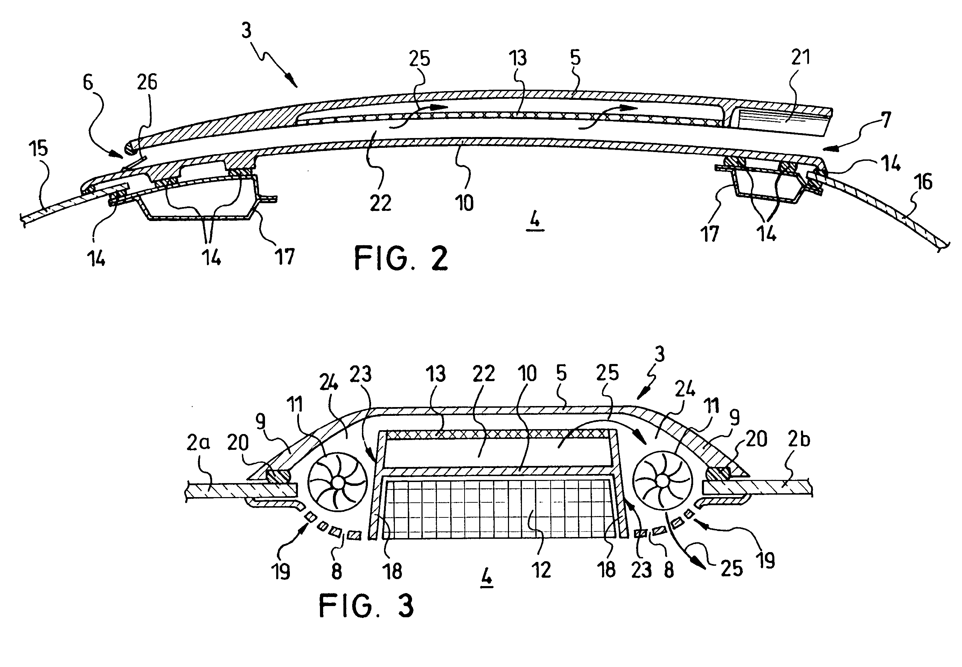

Fig. 1 zeigt eine Teilansicht eines Fahrzeugs mit einem Fahrzeugdach 1, welches als Glasdach mit einer rechten Glasfläche 2a und einer linken Glasfläche 2b ausgebildet ist. Im wesentlichen mittig zwischen den beiden Glasflächen 2a, 2b ist ein länglicher Belüftungsaufsatz 3 angebracht, der eine Abdeckung 5 enthält, unter der ein den Belüftungsaufsatz 3 in Längsrichtung durchsetzender Luftkanal 22 ( siehe Fig. 2) verläuft. Die Abdeckung 5 enthält eine vordere Luftöffnung 6 und eine hintere Luftöffnung 7 für den Luftkanal 22. Im Fahrbetrieb durchströmt ein über die vordere Luftöffnung 6 zuströmender Luftstrom den Luftkanal 22.

Ein Luftkanalboden 10 des Belüftungsaufsatzes 3 bildet eine Unterseite des Luftkanals 22. Der Luftkanalboden 10 ist über schematisch angedeutete Dichtungen 14 mit Fahrzeugteilen, z.B. der Frontscheibe 15, der Heckscheibe 16 und vorderen und hinteren Dachquerholmen oder Querspriegeln 17 des Fahrzeugs abdichtend verbunden. Der Luftkanal 22 ist des weiteren beidseits von Seitenwänden 23 begrenzt. Die Oberseite des Luftkanals 22 wird in einem Vorderabschnitt von der Abdeckung 5 und in einem anschließenden Abschnitt von einem Luftfilter 13 gebildet. Der Luftfilter 13 ist von der sich darüber erstreckenden Abdeckung 5 beabstandet angeordnet, so daß den Luftkanal 22 durchströmende Luft durch den Luftfilter 13 hindurch in die beiden seitlichen Hohlräume 24 neben dem Luftkanal 22 einströmen und daraus über Belüftungsöffnungen 8 in den Fahrzeuginnenraum 4 gelangen kann (beispielhaft ist ein Strömungsweg durch Pfeile 25 schematisch dargestellt), wodurch das Innenklima des Fahrzeuginnenraums 4 verändert und reguliert werden kann. Grobe Verschmutzungspartikel wie z. B. Insekten können somit den Luftkanal 22 unbehindert durchströmen, während die den Innenraum 4 belüftende Luft durch den Luftfilter 13 gereinigt wird. Da der Luftfilter 13 somit im wesentlichen nicht im unmittelbaren Strömungsweg der groben Verschmutzungspartikel liegt, wird er weniger schnell verschmutzen.

Der Strömungsquerschnitt der beiden Luftöffnungen 6 und 7 kann durch eine jeweilige Einrichtung, z. B. durch Klappen 26 oder dergleichen (nur an der vorderen Luftöffnung 6 ist eine Klappe 26 schematisch dargestellt), unabhängig voneinander eingestellt werden. Durch Einstellung des Öffnungsgrades der Luftöffnungen 6 und 7 kann der den Belüftungsaufsatz 3 durchströmende Luftstrom von einem maximalen Wert bis auf Null abgesenkt werden. Ferner kann der Belüftungsaufsatz 3 variabel betrieben werden, wobei die Luftöffnungen 6 und 7 entweder beide geöffnet sind oder einzeln geschlossen sind. Wird z. B. die vordere Luftöffnung 6 vollständig geöffnet und die hintere Luftöffnung 7 geschlossen, so wird die gesamte Luftströmung im Luftkanal 22 zwangsweise durch den Luftfilter 13 in den Fahrzeuginnenraum 4 geleitet.

Im Bereich der hinteren Luftöffnung 7 kann in den Belüftungsaufsatz 3, z. B. in dessen Abdeckung 5, ein Lichtelement 21 wie z. B. eine Bremsleuchte integriert sein.

Der Luftkanalboden 10 kann zusammen mit den Seitenteilen 23 einen im wesentlichen H-förmigen Querschnitt aufweisen (siehe Fig. 3), wobei im oberen Bereich des H-förmigen Querschnitts als Abdeckung des Luftkanals 22 der Luftfilter 13 (z. B. ein an sich bekannter Gewebefilter) und im unteren H-förmigen Bereich ein Nutzbereich 12 des Belüftungsaufsatzes 3 zum Anbringen von Bauelementen wie Staufächern, Sichtanzeigen, Lautsprechern und dergleichen vorgesehen ist. Die Unterabschnitte 18 der Seitenwände 23 des Luftkanalbodens 10 mit H-förmigem Querschnitt sind mit den Glasflächen 2a, 2b dicht verbunden, wobei die Verbindungsbereiche 19, z. B. eine Innenverkleidung, Be- und/oder Entlüftungsöffnungen 8 aufweisen, durch die die Luft in den Fahrzeuginnenraum 4 einströmen oder daraus abströmen kann. Der Querschnitt der Luftöffnungen 8 kann einstellbar (z. B. durch Klappen) gebildet sein, so daß der dem Fahrzeuginnenraum 4 zugeleitete Luftstrom auch auf diese Weise reguliert werden kann.

Über Dichtungen 20 sind die Längsseiten 9 der Abdeckung 5 mit den Glasflächen 2a und 2b des Fahrzeugdachs 1 dicht verbunden.

Unabhängig von dem durch die Fahrbewegung des Fahrzeugs entstehenden Luftstrom im Luftkanal 22 oder ergänzend hierzu kann ein Luftstrom durch Lüfter 11 erzeugt werden, die in den Hohlräumen 24 zwischen den Verbindungsbereichen 19 und der Abdeckung 5 des Belüftungsaufsatzes 3 angeordnet sein können. Die Lüfter 11 können auch im Stand des Fahrzeugs betrieben werden und zum Einblasen und/oder zum Absaugen von Luft betrieben werden.

Der Belüftungsaufsatz 3 kann teilbar gebildet sein, so daß der Luftfilter 13 leicht zugänglich und austauschbar ist.

### Bezugszeichenliste

- 1: Fahrzeugdach
- 2: Glasfläche
- 3: Belüftungsaufsatz
- 4: Fahrzeuginnenraum
- 5: Abdeckung
- 6: vordere Luftöffnung
- 7: hintere Luftöffnung
- 8: Belüftungsöffnung
- 9: Längsseite
- 10: Luftkanalboden
- 11: Lüfter
- 12: Nutzbereich
- 13: Luftfilter
- 14: Dichtung
- 15: Frontscheibe
- 16: Heckscheibe
- 17: Querspriegel
- 18: Unterabschnitt
- 19: Verbindungsbereich
- 20: Dichtung
- 21: Lichtelement
- 22: Luftkanal
- 23: Seitenwand
- 24: Hohlraum
- 25: Strömungsweg
- 26: Klappe

## Patentansprüche

1. Belüftungsaufsatz für ein Fahrzeugdach zur Belüftung des Fahrzeuginnenraums,
**dadurch gekennzeichnet,**
**daß** der länglich gebildete Belüftungsaufsatz (3) einen Luftkanal (22) mit einer vorderen Luftöffnung (6) und mit einer hinteren Luftöffnung (7), die oberhalb des Fahrzeugdaches (1) münden, aufweist und
**daß** der Luftkanal (22) über einen im Belüftungsaufsatz (3) gebildeten Strömungsweg (25) mit dem Fahrzeuginnenraum (4) in Strömungsverbindung ist.

2. Belüftungsaufsatz nach Anspruch 1,
**dadurch gekennzeichnet, daß** der Belüftungsaufsatz (3) im Strömungsweg (25) einen Luftfilter (13) enthält.

3. Belüftungsaufsatz nach Anspruch 1 oder 2,
**dadurch gekennzeichnet, daß** der Belüftungsaufsatz (3) in das Fahrzeugdach (1) integriert ist.

4. Belüftungsaufsatz nach einem der Ansprüche 1 bis 3,
**dadurch gekennzeichnet, daß** die Größe des Strömungsquerschnitts der vorderen Luftöffnung (6) und/oder der hinteren Luftöffnung (7) des Belüftungsaufsatzes (3) verstellbar ist.

5. Belüftungsaufsatz nach Anspruch 4,
**dadurch gekennzeichnet, daß** die vordere Luftöffnung (6) und/oder die hintere Luftöffnung (7) des Belüftungsaufsatzes (3) elektrisch oder elektronisch verstellbar und insbesondere verschließbar sind.

6. Belüftungsaufsatz nach einem der vorhergehenden Ansprüche,
**dadurch gekennzeichnet, daß** die Abdeckung (5) an ihren Längsseiten (9) abdichtend mit dem Fahrzeugdach (1) verbunden ist.

7. Belüftungsaufsatz nach einem der vorhergehenden Ansprüche,
**dadurch gekennzeichnet, daß** der Belüftungsaufsatz (3) unter der Abdekkung (5) einen Luftkanalboden (10) für den Luftkanal (22) enthält.

8. Belüftungsaufsatz nach Anspruch 7,
**dadurch gekennzeichnet, daß** der Luftkanalboden (10) mit Seitenwänden (23) des Luftkanals (22) zumindest bereichsweise eine H-förmige Querschnittsform besitzt.

9. Belüftungsaufsatz nach einem der vorhergehenden Ansprüche,
**dadurch gekennzeichnet, daß** der Belüftungsaufsatz (3) mindestens einen Lüfter (11), insbesondere einen Radiallüfter, zum Erzeugen einer Luftströmung im Strömungsweg (25) aufweist.

10. Belüftungsaufsatz nach einem der vorhergehenden Ansprüche,
**dadurch gekennzeichnet, daß** an der dem Fahrzeuginnenraum (4) zugewandten Unterseite (19) des Belüftungsaufsatzes (3) Belüftungsöffnungen (8) für eine Luftströmung vom/zum Fahrzeuginnenraum (4) vorgesehen sind.

11. Belüftungsaufsatz nach einem der vorhergehenden Ansprüche,
**dadurch gekennzeichnet, daß** der Belüftungsaufsatz (3) einen vom Fahrzeuginnenraum (4) her zugänglichen Nutzbereich (12) aufweist.

12. Belüftungsaufsatz nach Anspruch 11,
**dadurch gekennzeichnet, daß** der Nutzbereich (12) unter dem insbesondere H-förmig gebildeten Luftkanalboden (10) vorgesehen ist.

13. Fahrzeugdach mit einem Belüftungsaufsatz nach einem der Ansprüche 1 bis 12,
**dadurch gekennzeichnet,**
**daß** der längliche Belüftungsaufsatz (3) am Fahrzeugdach (1) im wesentlichen mittig in Dachlängsrichtung angebracht ist.

14. Fahrzeugdach nach Anspruch 13,
**dadurch gekennzeichnet, daß** sich der Belüftungsaufsatz (3) am Fahrzeugdach (1) im wesentlichen von der Frontscheibe (15) bis zur Heckscheibe (16) erstreckt.

15. Fahrzeugdach nach Anspruch 13 oder 14,
**dadurch gekennzeichnet, daß** das Fahrzeugdach (1) als Glasdach mit mindestens zwei Glasflächen (2a, 2b) ausgebildet ist, zwischen denen der Belüftungsaufsatz (3) angeordnet ist.

16. Dachmodul für ein Fahrzeugdach mit einem Belüftungsaufsatz nach einem der Ansprüche 1 bis 12.
